**Europäisches Patentamt**

**European Patent Office**

**Office européen des brevets**

(19)

(11) Veröffentlichungsnummer: **0 032 532**
**B1**

(12) ## EUROPÄISCHE PATENTSCHRIFT

(45) Veröffentlichungstag der Patentschrift:
**11.07.84**

(21) Anmeldenummer: **80106840.4**

(22) Anmeldetag: **06.11.80**

(51) Int. Cl.³: **C 04 B 29/02,** C 04 B 35/66,
C 04 B 9/04

(54) **Phosphatzement.**

(30) Priorität: **16.01.80 DE 3001400**

(43) Veröffentlichungstag der Anmeldung:
**29.07.81 Patentblatt 81/30**

(45) Bekanntmachung des Hinweises auf die Patenterteilung:
**11.07.84 Patentblatt 84/28**

(84) Benannte Vertragsstaaten:
**BE DE FR GB IT NL**

(56) Entgegenhaltungen:
**AU - B - 442 225**
**DE - A - 2 126 521**
**DE - A - 2 325 973**
**DE - A - 2 635 178**
**US - A - 3 202 520**

(73) Patentinhaber: **Alcoa Chemie GmbH, Giulinistrasse 2,
D-6700 Ludwigshafen (DE)**

(72) Erfinder: **Appelt, Robert, Wasgaustrasse 21,
D-6700 Ludwigshafen/Rhein (DE)**
Erfinder: **Pohland, Horst, Dr. Dipl.-Chem., Schwetzinger
Strasse 39, D-6703 Limburgerhof (DE)**

(74) Vertreter: **Benatzky, Erika, Dr., Giulinistrasse 2,
D-6700 Ludwigshafen/Rh. (DE)**

## Beschreibung

Gegenstand der vorliegenden Erfindung ist ein Phosphatzement zur Herstellung kalthärtender Feuerfestmassen auf Basis von Monoaluminiumphosphat.

Als Zemente werden auf dem Gebiet der Feuerfestauskleidung in zunehmendem Masse Calciumaluminatzemente, auch Tonerdezemente genannt, eingesetzt. Tonerdezemente zeichnen sich gegenüber den Portlandzementen vor allem durch eine schnellere Erhärtung aus. Die von abgebundenen Tonerdezementen nach 24 Stunden erreichten Festigkeiten übertreffen im allgemeinen diejenigen von Portlandzementen nach 28 Tagen. Ausserdem zeigen Tonerdezemente eine weitaus grössere chemische Beständigkeit als Portlandzemente. Das Wasser-Zement-Verhältnis liegt bei Tonerdezementen höher als bei Portlandzementen, so dass sie wegen ihres grösseren chemischen Wasserbedarfs in Mischung mit Zuschlagstoffen weiterhin leichter verarbeitbar sind.

Trotz der aufgezählten Vorteile werden jedoch Tonerdezemente auf vielen Anwendungsgebieten noch nicht als zufriedenstellend bezeichnet, beispielsweise auf dem Gebiet hochwertiger Feuerfestmaterialien auf $Al_2O_3$-Basis. Die Feuerbeständigkeit hochwertiger Materialien, z.B. von Tabulartonerde, kann durch Tonerdezement beträchtlich herabgesetzt werden. Nach W.S. Treffner (Ceram. Bull. Vol. 58, Nr. 7 [1979] S. 716) liegen die Grenzen der thermischen Belastbarkeit für Calciumaluminatzement in Abhängigkeit vom Reinheitsgrad des Zements zwischen 1200 und 1760°C, wobei als Grenzbereich für Zemente mit höchstem Reinheitsgrad der Bereich von 1593 bis 1760°C angegeben wird. Die thermische Belastbarkeitsgrenze für Tabulartonerde liegt jedoch oberhalb 1950°C.

Aus AU-B-42 225 ist ein Schnellbinder bekannt, der als pulverförmige Komponente neben Magnesiumoxid auch Aluminiumoxid enthält, jedoch wird die schnelle Abbindung durch freie Phosphorsäure und nicht durch Monoaluminiumphosphat erzielt.

Die kalt abbindende trockene Pulverzusammensetzung der DE-A-2 325 973 besteht aus einem wasserlöslichen Aluminiumphosphatbindemittel und einem reaktionsträgen Magnesiumoxid, jedoch wird wegen der völlig unzureichenden Lagerfähigkeit der feuerfeste Stoff erst mit dem Wasser zugegeben. Die Komponenten werden mindestens in 2 Packungen gelagert.

Schliesslich ist in DE-A-2 126 521 noch ein pulverförmiges Bindemittel zur Herstellung feuerfester Massen beschrieben, bei dem das flüssige Phosphat auf ein feinteiliges poröses Trägermaterial aus Asche von kieselsäurehaltigen organischen, im wesentlichen eine Faserstruktur aufweisenden Materialien, z.B. Schilf und Reisschalen, niedergeschlagen und gegebenenfalls getrocknet wird.

Wie sich weiterhin gezeigt hat, können chemische Hochtemperaturprozesse, z.B. Crackprozesse, durch feuerfestes Material, das mit Hilfe von Tonerdezement hergestellt worden ist, gestört werden. So können katalytisch beeinflusste Reaktionen mehr oder weniger stark in andere Richtungen gelenkt werden.

Der vorliegenden Erfindung liegt nunmehr die Aufgabe zugrunde, einen Zement für hochwertige Feuerfestmassen zu schaffen, der die vorstehenden Nachteile nicht aufweist. Dabei sollen jedoch die für Tonerdezement geltend gemachten guten Eigenschaften, wie leichte Verarbeitbarkeit und kurze Abbindezeit, möglichst erhalten bleiben.

Die gestellte Aufgabe kann überraschenderweise mit einem Phosphatzement auf Basis von Monoaluminiumphosphat gelöst werden. Das wesentliche Kennzeichen des neuen Phosphatzements wird darin gesehen, dass er aus 35–55 Gew.-% pulverförmigen Monoaluminiumphosphat, 5–15 Gew.-% Magnesiumoxid und 30–60 Gew.-% Trennmaterial besteht. Eine Zementmischung der vorstehenden Zusammensetzung ist ein Einkomponentensystem und kann den feuerfesten Zuschlagstoffen auch nach langer Lagerzeit zugemischt werden, etwa in einem Zementmischer oder in vergleichbaren Aggregaten. Nach Wasserzusatz liegt dann ein rüttelfähiger, kalthärtender Feuerbeton vor. Bei Abwesenheit von Wasser bleibt auch die Betonmischung unbegrenzt lagerfähig.

Ein besonders hochwertiger Phosphatzement liegt dann vor, wenn er aus 40–50 Gew.-% pulverförmigem Monoaluminiumphosphat, 8–12 Gew.-% Magnesiumoxid und mindestens 40 Gew.-% Trennmaterial besteht. Gute Ergebnisse können jedoch auch noch mit Zementen erhalten werden, welche das Aluminiumphosphat in Mengen von 35–55 Gew.-%, Magnesiumoxid in Mengen von 5–15 Gew.-% und das Trennmaterial in Mengen von mindestens 30 Gew.-% enthalten. Die angegebenen Gewichtsprozente beziehen sich jeweils auf den aus mindestens 3 Komponenten bestehenden und lagerfähigen Phosphatzement.

Feuerfeste Zemente auf der Grundlage eines flüssigen Aluminiumphosphat-Bindemittels sind zwar bekannt, z.B. aus der DE-A-2 817 339, jedoch haben sie bis jetzt in der Praxis keine Bedeutung erlangt. Derartige Zemente sind nämlich Mehrkomponentensysteme und müssen als eine aus mehreren einzelnen Packungen bestehende Mehrkomponentenverpackung vertrieben werden. Nur so kann das flüssige Aluminiumphosphat von den reaktiven Zementbestandteilen getrennt werden. Die Nachteile eines derartigen Systems liegen auf der Hand. Ausserdem enthalten diese Systeme als Zementbestandteil Tonerdezement in Mengen von 10–50 Gew.-%, so dass die eingangs erwähnten Nachteile nicht eliminiert werden.

Weiterhin ist vorgeschlagen worden, pulverförmiges Monoaluminiumphosphat $Al(H_2PO_4)_3$ als Phosphatbinder in feuerfesten Massen einzusetzen und diese Massen nach Zusatz von Anmachwasser in an sich bekannter Weise thermisch zu behandeln. Daraus konnten jedoch die Vorteile, die sich aus der Verwendung von pulverförmigem Monoaluminiumphosphat in Zementmischungen gemäss der Erfindung ergeben, nicht ohne weiteres hergeleitet werden.

Das in den beanspruchten Mischungen eingesetzte Monoaluminiumphosphat sollte nur einen geringen Feuchtigkeitsgehalt aufweisen. Wie sich gezeigt hat, sollte der Feuchtigkeitsgehalt des einzumischenden Aluminiumphosphats unterhalb 5 Gew.-%, insbesondere jedoch unterhalb 1 Gew.-%, gehalten werden. Bei Einhaltung dieser Forderung sind die beanspruchten Phosphatzemente über lange Zeiten lagerfähig.

Als MgO wird zweckmässigerweise ein reaktionsträgeres Oxid, wie es z.B. in Elektroschmelzmagnesia vorliegt, verwendet. Da die Abbindezeit des Zements u.a. von der Korngrösse des Magnesiumoxids bestimmt wird, ist es angezeigt, die geeignete Korngrösse an Hand von wenigen Versuchen zu ermitteln und somit die Reaktionsgeschwindigkeit auf die gewünschte Abbindezeit abzustellen. Die Korngrösse handelsüblicher Elektroschmelzmagnesia sollte kleiner als 0,5 mm sein. Als besonders geeignet erwiesen haben sich Korngrössen im Bereich von 0–0,07 mm.

Gute Ergebnisse wurden auch mit Sintermagnesia erzielt, das eine geringe Reaktivität aufwies und eine Didhte von $\geq 3,45$ g/ml hatte. Das inaktive feuerfeste Trennmaterial kann beliebig gewählt werden. Wesentlich hierbei ist nur, dass die Teilchengrösse so gewählt wird, dass eine vorzeitige Reaktion zwischen den beiden anderen Komponenten verhindert wird. Das Trennmaterial wird demnach möglichst feinkörnig sein, die Korngrösse etwa in einem Bereich von 0 bis 0,063 liegen. Besonders geeignet hierfür sind Aluminiumoxide, z.B. hexagonales alpha-Aluminiumoxid (hexagonale Korundkristalle), Tabulartonerde und calciniertes alpha-Aluminiumoxid. Es können jedoch auch andere Trennmittel, z.B. Mullit, eingesetzt werden.

Die beanspruchten, aus mindestens 3 festen Komponenten bestehenden Phosphatzemente sind praktisch unbegrenzt lagerfähige Mischungen, die weder verhärten noch verklumpen. Ihre Bindefähigkeit bleibt bei der Lagerung erhalten. Nach Einmischen in feuerfeste Materialien geeigneter Körnung entstehen nach Zusatz von Wasser rüttelfähige, kalthärtende Feuerfestbetone. Verarbeitung und Eigenschaften der Feuerfestbetone werden von der vorausgegangenen Lagerzeit des Zements nicht beeinflusst. Die Menge des eingesetzten Phosphatzements liegt zweckmässigerweise zwischen 1 und 15 Gew.-%, bezogen auf trockene Masse, insbesondere zwischen 3 und 10 Gew.-%.

Erwähnenswert ist an dieser Stelle, dass Mischungen aus pulverförmigem Monoaluminiumphosphat und Magnesiumoxid, also Zweikomponentensysteme, während der Lagerung verkleben, Klumpen bilden und nicht mehr rieselfähig sind. Derartige Mischungen können nicht mehr homogen in Feuerfestmaterialien verteilt werden und zeigen darüber hinaus eine erheblich verminderte Wirkung.

Anhand der nachstehenden Beispiele wird der Erfindungsgegenstand noch verdeutlicht. Die erzielte Feuerbeständigkeit lag im Beispiel 1 bei etwa 1900 °C.

Beispiel 1
Es wurde aus
5 Gew.-Teilen    Monoaluminiumphosphatpulver (Feuchte < 1%)
6 Gew.-Teilen pulverförmigem alpha-Aluminiumoxid < 0,044 mm und
1 Gew.-Teil Elektroschmelzmagnesia < 0,07 mm ein Phosphatzement hergestellt und 2 Monate unter einer Belastung von 8,000 kg gelagert. Das frei fliessende Gemisch blieb während dieser Zeit unverändert. Zu Beginn und am Ende der Lagerversuche wurden durch Rütteln geformte und kalt erhärtete Probekörper nach folgender Rezeptur hergestellt:
600    Gew.-Teile Tabulartonerde 0–6,4 mm
 60    Gew.-Teile Phosphatzement
 46,2 Gew.-Teile Wasser (7%).

Gemessene Kaltdruckfestigkeiten:

| Temperatur | KDF (N/mm²) | |
|---|---|---|
| | Beginn | nach zweimonatiger Zementlagerung |
| 20°* | 19,0 | 10,1 |
| 150° | 20,8 | 23,0 |
| 650° | 16,9 | 22,6 |
| 1150° | 38,2 | 38,3 |

* 24 Stunden in der Form belassen, dann sofort auf KDF geprüft.

Beispiel 2
Wie in Beispiel 1 beschrieben, wurden aus
600    Gew.-Teilen Mullitmasse 0–4 mm
 60    Gew.-Teilen Phosphatzement
 49,5 Gew.-Teilen Wasser (7,5%)
Probekörper hergestellt.

Folgende Kaltdruckfestigkeiten wurden gemessen:

| Temperatur | KDF (N/mm²) | |
|---|---|---|
| | Beginn | nach 4 Wochen Zementlagerung |
| 20°* | 3,2 | 2,8 |
| 150° | 13,0 | 13,8 |
| 650° | 20,7 | 16,3 |
| 1150° | 24,4 | 26,0 |

* 24 Stunden in der Form belassen, dann sofort auf KDF geprüft.

**Patentansprüche**

1. Phosphatzement zur Herstellung kalthärtender Feuerfestmassen auf Basis von Monoaluminiumphosphat, dadurch gekennzeichnet, dass er aus

35–55 Gew.-% pulverförmigem Monoaluminiumphosphat
5–15 Gew.-% Magnesiumoxid
30–60 Gew.-% Trennmaterial
besteht.

2. Phosphatzement nach Anspruch 1, dadurch gekennzeichnet, dass er aus
40–50 Gew.-% Monoaluminiumphosphat
8–12 Gew.-% Magnesiumoxid und
mindestens 40 Gew.-% Trennmaterial besteht.

3. Phosphatzement nach den Ansprüchen 1 und 2, dadurch gekennzeichnet, dass er als Magnesiumoxid Elektroschmelzmagnesia und/oder Sintermagnesia enthält.

4. Phosphatzement nach den Ansprüchen 1 und 2, dadurch gekennzeichnet, dass er als inaktives feuerfestes Trennmaterial Tabulartonerde enthält.

5. Phosphatzement nach den Ansprüchen 1 und 2, dadurch gekennzeichnet, dass er als inaktives feuerfestes Trennmaterial alpha-Aluminiumoxid, insbesondere hexagonale alpha-Aluminiumoxidkristalle, enthält.

6. Phosphatzement nach dem Anspruch 3, dadurch gekennzeichnet, dass die Korngrösse der Elektroschmelzmagnesia kleiner als 0,5 mm ist.

7. Phosphatzement nach Anspruch 6, dadurch gekennzeichnet, dass die Korngrösse der Elektroschmelzmagnesia in einem Bereich von 0–0,07 mm liegt.

8. Phosphatzement nach Anspruch 3, dadurch gekennzeichnet, dass die Dichte der Sintermagnesia ≥ 3,45 g/ml beträgt.

9. Phosphatzement nach den Ansprüchen 4 und 5, dadurch gekennzeichnet, dass die Korngrösse des Aluminiumoxids in einem Bereich von 0–0,063 mm liegt.

10. Phosphatzement nach den Ansprüchen 1 bis 9, dadurch gekennzeichnet, dass der Feuchtigkeitsgehalt des Monoaluminiumphosphats kleiner als 5 Gew.-%, insbesondere kleiner als 1 Gew.-% ist.

### Claims

1. Phosphate cement for the production of cold-setting refractory masses based on monoaluminium phosphate, characterised in that it consists of
35–55% by weight of powdered monoaluminium phosphate
5–15% by weight of magnesium oxide
30–60% by weight of diluting filler.

2. Phospate cement as claimed in claim 1, characterised in that it consists of
40–50% by weight of monoaluminium phosphate
8–12% by weight of magnesium oxide and
at least 40% by weight of diluting filler.

3. Phosphate cement as claimed in claims 1 and 2, characterised in that it contains, as magnesium oxide, electrically smelted magnesia and/or sintered magnesia.

4. Phosphate cement as claimed in claims 1 and 2, characterised in that it contains, as the inactive refractory diluting filler tabular alumina.

5. Phosphate cement as claimed in claims 1 and 2, characterised in that it contains, as the inactive refractory diluting filler, α-aluminium oxide, particularly hexagonal α-aluminium oxide crystals.

6. Phosphate cement as claimed in claim 3, characterised in that the particle size of the electrically smelted magnesia is less than 0.5 mm.

7. Phosphate cement as claimed in claim 6, characterised in that the particle size of the electrically smelted magnesia is within the range from 0–0.07 mm.

8. Phosphate cement as claimed in claim 3, characterised in that the density of the sintered magnesia is ≥ 3.45 g/ml.

9. Phosphate cement as claimed in claims 4 and 5, characterised in that the particle size of the aluminium oxide is within the range from 0–0.063 mm.

10. Phosphate cement as claimed in claims 1 to 9, characterised in that the moisture content of the monoaluminium phosphate is less than 5% by weight, more particularly less than 1% by weight.

### Revendications

1. Ciment phosphaté pour la fabrication de masses réfractaires durcissant à froid, à base de phosphate de mono-aluminium, caractérisé en ce qu'il consiste en
35–55% en poids de phosphate de mono-aluminium pulvérulent
5–15% en poids d'oxyde de magnésium
30–60% en poids de matériau de séparation.

2. Ciment phosphaté selon la revendication 1, caractérisé en ce qu'il consiste en
40–50% en poids de phosphate de mono-aluminium
8–12% en poids d'oxyde de magnésium et
en au moins 40% en poids de matériau de séparation.

3. Ciment phosphaté selon les revendications 1 et 2, caractérisé en ce qu'il contient comme oxyde de magnésium de la magnésie fondue au four électrique et/ou de la magnésie frittée.

4. Ciment phosphaté suivant les revendications 1 et 2, caractérisé en ce qu'il contient comme matériau de séparation réfractaire inactif de l'alumine tabulaire.

5. Ciment phosphaté selon les revendications 1 et 2, caractérisé en ce qu'il contient comme matériau de séparation inactif réfractaire de l'oxyde d'aluminium alpha, en particulier des cristaux d'oxyde d'aluminium alpha hexagonaux.

6. Ciment phosphaté selon la revendication 3, caractérisé en ce que la granulométrie de la magnésie fondue au four électrique est inférieure à 0,5 mm.

7. Ciment phosphaté selon la revendication 6, caractérisé en ce que la granulométrie de la magnésie fondue au four électrique se situe dans un intervalle de 0–0,07 mm.

8. Ciment phosphaté selon la revendication 3, caractérisé en ce que la densité de la magnésie frittée est ≥ 3,45 g/ml.

9. Ciment phosphaté selon les revendications 4 et 5, caractérisé en ce que la granulométrie de l'oxyde d'aluminium se situe dans un intervalle de 0–0,063 mm.

10. Ciment phosphaté selon les revendications 1 à 9, caractérisé en ce que la teneur en humidité phosphate de mono-aluminium est inférieure à 5% en poids, en particulier inférieure à 1% en poids.